# EUROPÄISCHE PATENTANMELDUNG

(11) **EP 4 541 519 A1**
(43) Veröffentlichungstag der Anmeldung: **23.04.2025**
(21) Anmeldenummer: 24192580.9
(22) Anmeldetag: 02.08.2024
(51) Int. Cl.: B25J 9/00, B25J 19/02

(54) **ROBOTERSYSTEM MIT EINEM ROBOTER UND EINER BODENPLATTE**

(30) Priorität: 20.10.2023 DE 102023128961
(71) Anmelder: IGZ Ingenieurgesellschaft für logistische Informationssysteme mbH, 95685 Falkenberg (DE)
(72) Erfinder: Dipl.-Ing. Zrenner, Johann, 95685 Falkenberg (DE)
(74) Vertreter: Strehl & Partner mbB

(57) **Zusammenfassung**

Die Erfindung betrifft ein Robotersystem (10) mit einem Roboter (12) und einer Bodenplatte (14) zum Aufstellen des Roboters (12) in einer definierten Aufstellposition, wobei die Bodenplatte (14) zur Verankerung im Boden ausgelegt ist.

Es wird vorgeschlagen, dass die Bodenplatte (14) und der Roboter (12) Zentrierstrukturen (22a, 22b) zum Zentrieren des Roboters (12) beim Vorgang des vertikalen Abstellens des Roboters (12) auf der Bodenplatte (14) umfassen, wobei der Roboter (12) beim Vorgang des vertikalen Abstellens des Roboters (12) auf der Bodenplatte (14) durch die Zentrierstrukturen (22a, 22b) in beiden horizontalen Richtungen in die definierte Aufstellposition verschoben wird.

## Beschreibung

Die Erfindung betrifft ein Robotersystem mit einem Roboter und einer Bodenplatte nach dem Oberbegriff des Anspruchs 1.

Aus der EP 3 738 719 A1 ist ein mobiler Roboter zum Kommissionieren von Artikeln bekannt, der einen auf einem fahrbaren Sockel montierten Industrieroboter umfasst. Der Roboter ist zur Anordnung an einer Fördertechnik ausgelegt und umfasst an einer der Fördertechnik zugewandten Vorderseite Arretierungsmittel zum Arretieren des Roboters an der Fördertechnik. Die Arretierungsmittel umfassen Führungsschrägen auf der Seite der Fördertechnik und komplementäre Führungsschrägen auf der Seite des Roboters, so dass der Roboter beim Heranschieben an die Fördertechnik in einer Arbeitsposition arretiert wird.

Ein weiterer mobiler Kommissionierroboter ist aus der DE 10 2021 101213 A1 bekannt.

Eine präzise reproduzierbare Arbeitsposition ist bei gattungsgemäßen, mobilen bzw. lösbar befestigten Robotern wesentlich, da dadurch Aufwand beim Kalibrieren des Roboters vermieden werden kann.

Zum Gewährleisten einer reproduzierbaren Arbeitsposition wird in der WO2010068005A3 ein Montagesockel für einen chirurgischen Roboter offenbart, der an einer OP-Liege befestigt werden kann. In der DE202015101621U1 werden ein transportabler Sockel für einen Roboter und eine andockbare Arbeitsplattform offenbart. Weiterer relevanter Stand der Technik ist in den Dokumenten DE 299 13 722 U1, DE 10 2013 207 468 A1, EP 3 738 719 A1 und DE 11 2019 004 214 T5 offenbart.

Insbesondere größere Robotersysteme können nur unter Schwierigkeiten gerollt werden und werden mit Hilfe von Hubwägen oder Gabelstaplern transportiert. Eine Verriegelung und Zentrierung an der Fördertechnik durch horizontales Heranschieben des Roboters kann dann, wenn der Roboter nicht hinreichend feinfühlig bewegt wird, zu Kollisionen und Schäden führen. Ferner kann durch eine Befestigung des Roboters lediglich an seiner Vorderkante je nach Reichweite des Greifarms des Roboters und Gewicht der bewegten Last nur ein unzureichender Kippschutz gewährleistet werden.

Der Erfindung liegt die Aufgabe zugrunde, eine zuverlässige Zentrierung eines mobilen Roboters auch dann zu gewährleisten, wenn dieser in einer vertikalen Abstellbewegung abgestellt wird.

Die Aufgabe wird gelöst durch ein Robotersystem mit den Merkmalen des Anspruchs 1. Vorteilhafte Ausgestaltungen der Erfindung ergeben sich aus den Unteransprüchen.

Die Erfindung betrifft ein Robotersystem mit einem Roboter und einer Bodenplatte zum Aufstellen des Roboters in einer Aufstellposition, wobei die Bodenplatte zur Verankerung im Boden ausgelegt ist.

Es wird vorgeschlagen, dass die Bodenplatte und der Roboter Zentrierstrukturen zum Zentrieren des Roboters beim Vorgang des vertikalen Abstellens des Roboters auf der Bodenplatte umfassen. Durch die Zentrierstrukturen kann auch bei bewegbaren Robotern, die an verschiedenen Arbeitsplätzen eingesetzt werden können, oder wenn der Roboter kurzzeitig zu Wartungszwecken von seinem Einsatzort entfernt wird, der Roboter ohne aufwändige Kalibrierung reproduzierbar an seiner Aufstellposition aufgestellt werden. Das Vorsehen der Zentrierstrukturen an Arbeitsplätzen, die auch von menschlichen Arbeitern genutzt werden können, hat trotz der damit einher gehenden Unannehmlichkeiten überwiegende Vorteile durch die Reproduzierbarkeit der Aufstellposition. Das erfindungsgemäße Robotersystem kann durch Anbringen der Bodenplatte einfach an einem regulären, für Menschen ausgelegten Arbeitsplatz nachgerüstet werden und durch das Entfernen der Bodenplatte kann dies unkompliziert wieder rückgängig gemacht werden. Aus dem letztgenannten Grund ist die Bodenplatte vorzugsweise einfach am Boden verschraubt.

In einer vorteilhaften Ausgestaltung der Erfindung wird vorgeschlagen, dass die Zentrierstrukturen wenigstens einen kegel- oder pyramidenstumpfförmigen Vorsprung der Bodenplatte und wenigstens eine entsprechende kegel- oder pyramidenstumpfförmige Ausnehmung an der Bodenseite des Roboters umfassen. Dadurch ist eine Zentrierung in beide horizontale Richtungen möglich.

Ferner wird vorgeschlagen, dass die Bodenplatte und der Roboter Verriegelungsstrukturen zum Verriegeln einer Verbindung zwischen Roboter und Bodenplatte umfassen. Dadurch kann zusätzlich zur Zentrierung eine kippsichere Aufstellung gewährleistet werden.

Eine einfach lösbare Verriegelung kann durch einen Entriegelungshebel zum Entriegeln der Verbindung erreicht werden. Die Verriegelung kann durch eine Rast- oder Schnappverbindung oder durch einen Verriegelungshebel hergestellt sein, wobei letzterer als kombinierter Ver- und Entriegelungshebel ausgestaltet sein kann.

In einer vorteilhaften Ausgestaltung der Erfindung umfasst der Roboter einen Sockel und einen auf einer Oberseite des Sockels montierten 5-Achs oder 6-Achs-Industrieroboter. Der Sockel umfasst an der Bodenseite, vorzugsweise zu einer Rückseite des Sockels hin geöffnete vertikale Öffnungen bzw. Staplertaschen oder Rinnen zum Einschieben der Zinken eines Hubwagens. Durch den Sockel kann der Roboter stabil montiert werden, insbesondere auf einer Höhe, die ein Arbeiten an einem für menschliche Arbeiter ausgelegten Arbeits- oder Kommissionierplatz mit einer Höhe von 60-90 cm ermöglicht. In den Sockel können eine als Industriecomputer ausgestaltete Steuereinheit, Energiezufuhr- oder Druckmittelanschlüsse und weitere Peripheriegeräte des Roboters integriert sein, die gemeinsam mit dem Roboter bewegt werden, so dass dieser nach dem Aufstellen unmittelbar einsatzbereit ist.

Insbesondere wird vorgeschlagen, dem Roboter mit einem am Sockel montierten Tragarm zum Tragen mindestens einer Kamera auszustatten, wobei der Tragarm an der Rückseite des Sockels in die Höhe ragt und über die Vorderseite des Sockels auskragt. Die zum Steuern der Greif- und Ablagevorgänge der Kamera erforderliche Kamera wird dann beim Bewegen des Roboters mitgeführt und muss an einem neuen Einsatzort nicht separat installiert und kalibriert werden.

In einer alternativen Ausgestaltung der Erfindung umfasst der Roboter keinen Tragarm bzw. einen optional montierbaren oder demontierbaren Tragarm. In diesem Fall detektiert der Roboter die Artikel und Greifpunkte mit Kameras, die unabhängig vom Roboter am Arbeitsplatz montiert sind. Die durch die Erfindung verbesserte Zentrierung vereinfacht die Kalibrierung dieser Kameras bzw. macht die Kalibrierung eines bereits zuvor kalibrierten, entfernten und wieder aufgestellten Roboters überflüssig.

Ferner wird vorgehschlagen, den Roboter mit einem in den Sockel integrierten Sicherheitsscanner auszustatten.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 ein Robotersystem nach einem ersten Ausführungsbeispiel der Erfindung mit angehobenem Roboter;
Fig. 2 ein Robotersystem nach einem ersten Ausführungsbeispiel der Erfindung mit abgestelltem Roboter;
Fig. 3 das Robotersystem aus den Figuren 1 - 2 mit angebrachter Abdeckung;
Fig. 4. eine Teilschnitt-Ansicht des Robotersystems nach den Figuren 1 und 2;
Fig. 5a einen Verriegelungsmechanismus des Robotersystems nach den Figuren 1 - 3 in einer entriegelten Konfiguration;
Fig. 5b den Verriegelungsmechanismus des Robotersystems nach den Figuren 1 - 3 in einer verriegelten Konfiguration;
Fig. 6a eine Teilschnitt-Ansicht des Robotersystems nach den Figuren 1 - 3 in einer entriegelten Konfiguration; und
Fig. 6b eine Teilschnitt-Ansicht des Robotersystems nach den Figuren 1 - 3 in einer verriegelten Konfiguration.

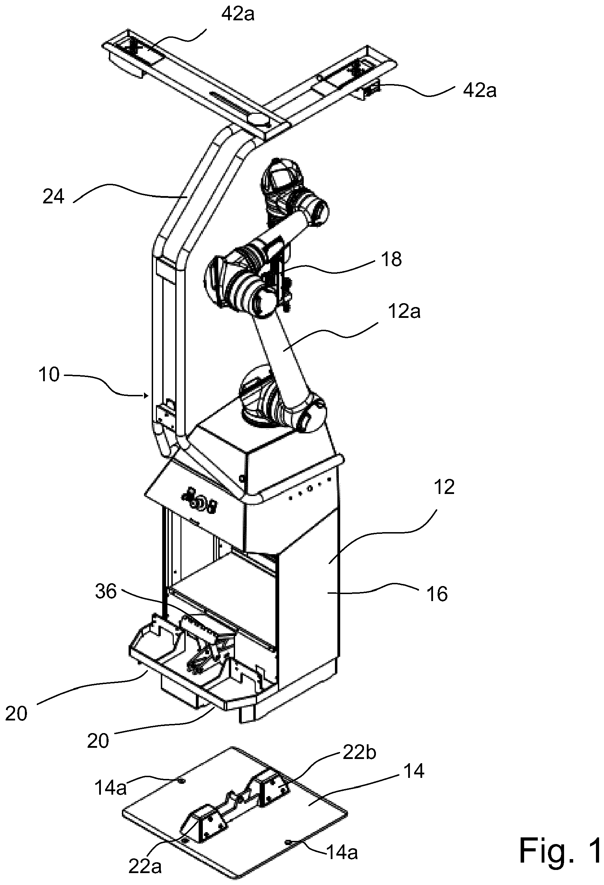

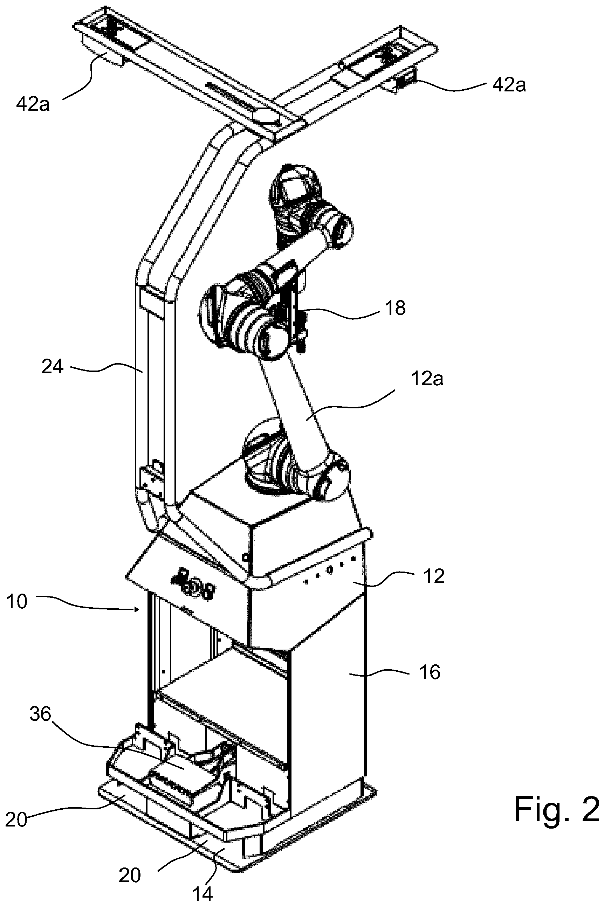

Die Figuren 1 - 2 zeigen ein Robotersystem 10 nach einem ersten Ausführungsbeispiel der Erfindung. Figur 1 zeigt das Robotersystem 10 mit angehobenem Roboter 12 und Figur 2 zeigt das Robotersystem 10 mit abgestelltem Roboter 12. Bei dem Robotersystem 10 handelt es sich um einen Kommissionierroboter zum vollautomatischen Kommissionieren in einem Warenlager.

Das Robotersystem 10 umfasst einen mobilen Roboter 12 und eine Bodenplatte 14 zum Aufstellen des Roboters 12 in einer Aufstellposition, wobei die Bodenplatte 14 über Schraublöcher 14a mit Schrauben (nicht dargestellt) im Boden verankert ist.

Der Roboter 12 umfasst einen 6-Achs-Industrieroboter 12a mit einem Endeffektor 18 mit Sauggreifern zum Greifen der zu kommissionierenden Artikel, der fest auf einem Sockel 16 montiert ist. In dem in Fig. 1 dargestellten Ausführungsbeispiel ist der Endeffektor 18 ein Endeffektor mit mehreren, durch Drehen aktivierbaren Sauggreifern, wie er in der DE 10 2019 110 516 A1 offenbart ist. Der Inhalt der DE 10 2019 110 516 A1 zu den konstruktiven Details des Endeffektors 18 wird durch Bezugnahme in die Offenbarung dieser Anmeldung aufgenommen.

Eine Bodenseite des Sockels 16 ist mit einer zur Rückseite des Sockels 16 hin geöffneten horizontalen Rinnen 20 bzw. Öffnungen zum Einschieben der Zinken eines Hubwagens oder Gabelstaplers (nicht dargestellt) ausgestattet.

Die Montageposition der Bodenplatte 14 definiert eine Aufstellposition des Roboters. Zum Aufstellen des Roboters 12 in der Aufstellposition kann der Hubwagen oder Gabelstapler mit seinen Zinken in die Rinnen 20 hineinfahren, den Roboter 12 anheben, über die Bodenplatte 14 heben und den Roboter 12 durch Absenken der Zinken auf die Bodenplatte 14 absenken. Im Verlauf dieses Absenkvorgangs wird der Roboter 12 mittels erfindungsgemäßer Zentrierstrukturen 22a, 22b der Bodenplatte 14 auf der Bodenplatte 14 zentriert.

Das Robotersystem 10 ist zur Aufstellung an einer Fördertechnik (nicht dargestellt) zum An- und Abtransportieren von Quell- und Zielbehältern ausgelegt und der Roboter 12 ist zum Greifen von Artikeln aus einem angedienten Quellbehälter und zum Ablegen dieser Artikel im Zielbehälter ausgelegt. Die Bodenplatte 14 ist daher vor einer Fördertechnik um Boden verschraubt Die Steuerung des Greif- und Ablagevorgangs erfolgt mit Hilfe einer oder mehrerer als 3D-Kamera ausgestalteten Kameras 42a, 42b, die über einen Tragarm 24 an einem Sockel 16 des Roboters 12 befestigt sind. Der am Sockel 16 montierte Tragarm 24 ragt an der Rückseite des Sockels 16 in die Höhe und kragt über die Vorderseite des Sockels 16 aus. Die Kameras 42a, 42b können über einen horizontalen Abschnitt des Tragarms 24 verstellt werden und mittig über den Quell- und Zielbehältern angeordnet werden.

In diesem Zusammenhang werden als Vorderseite die der Fördertechnik zugewandte Seite und als Rückseite die der Fördertechnik abgewandte Seite bezeichnet. Die von der Rückseite zur Vorderseite verlaufende horizontale Richtung wird im Folgenden als Längsrichtung bezeichnet und die orthogonal zur Längsrichtung verlaufende horizontale Richtung wird als Querrichtung bezeichnet.

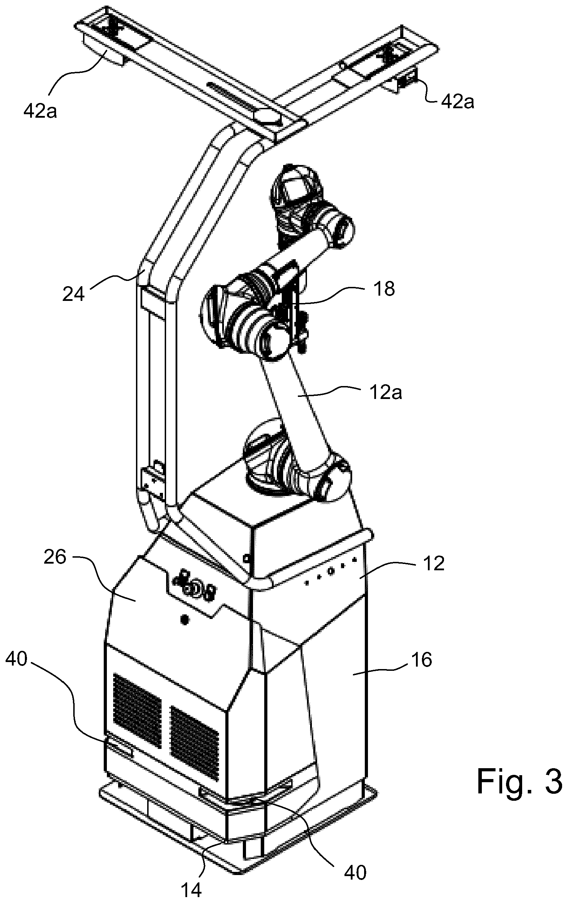

Figur 3 zeigt das Robotersystem 10 aus den Figuren 1 und 2 mit angebrachter Abdeckung 26 an der der Fördertechnik abgewandten Seite des Sockels 16. Die Abdeckung 26 verblendet den weiter unten detaillierter beschriebenen Verriegelungshebel. Oberhalb der Rinnen 20 für den Hubwagen sind in der Abdeckung 26 Schlitze vorgesehen, in welchen ein in den Sockel 16 integrierter Sicherheitsscanner 40 angeordnet ist.

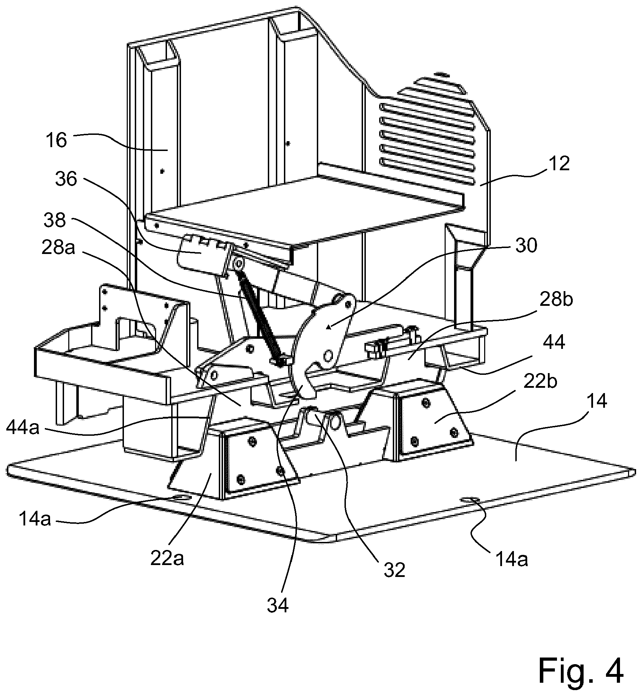

Figur 4 zeigt eine Teilschnitt-Ansicht des Robotersystems 10 nach den Figuren 1 und 2.

Die Bodenplatte 14 ist eine Eisen- oder Stahlstruktur und die Zentrierstrukturen 22a, 22b umfassen zwei pyramidenstumpfförmige Vorsprünge der Bodenplatte 14, die in einer orthogonal zur Fördertechnik verlaufenden Richtung hintereinander angeordnet sind. Seitenflächen der Zentrierstrukturen 22a, 22b sind mit Gleitplatten aus Hartkunststoff ausgestattet, z.B. PE. Die Gleitplatten können insbesondere auf den Seitenflächen in Querrichtung und auf der der Rückseite zugewandten Seitenfläche in der Längsrichtung der Zentrierstrukturen 22a, 22b vorgesehen sein, da dort ein Herabgleiten des Roboters beim Zentriervorgang am wahrscheinlichsten erscheint. In einer vorteilhaften Ausgestaltung der Erfindung sind zudem die Dachflächen der Rinnen 20, die beim Transport auf den Hubzinken des Hubwagens aufliegen, mit Gleitplatten verkleidet, um eine Reibkraft zwischen Roboter und Hubzinken zu reduzieren und so eine Querverschiebung des Roboters beim Herunterlassen und damit ein Zentrieren des Roboters zu vereinfachen.

Die Breite der Rinnen 20 ist ferner größer als die Breite der Hubzinken des Hubwagens, so dass auch bei den beim Zentriervorgang erwarteten Querverschiebungen von etwa 1 - 3 cm nicht zu erwarten ist, dass die Seitenwände der Rinnen 20 an die Hubzinken anschlagen und so die Zentrierbewegung behindern.

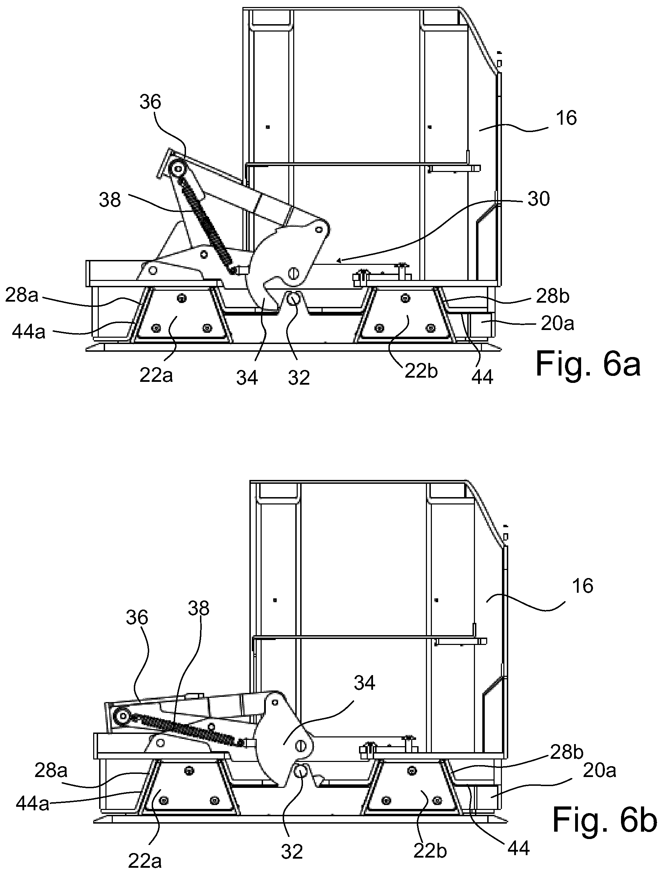

An der Vorderseite des Roboters 12 sind die Rinnen 20 mit Einlaufschrägen 20a (Fig. 6a, 6b) ausgestattet, die den Hubwagen bzw. den Roboter 12 beim Heranfahren an die Bodenplatte 14 in die richtige Richtung lenken.

Zwischen den Rinnen 20 für die Hubzinken ist in der Bodenfläche des Roboters 12 eine weitere, zur Vorderseite des Roboters 12 hin geöffnete Rinne 44 vorgesehen, deren Dachfläche 44a (um etwa die Hälfte der Höhe der Zentrierstrukturen 22a, 22b oberhalb der Standfläche 12a des Roboters 12 liegt (Fig. 6a, 6b). In dem in Fig. 6a und 6b dargestellten Ausführungsbeispiel beträgt die Höhe der Zentrierstrukturen 22a, 22b etwa 90 mm und die Höhe bzw. Tiefe der Rinne 44 in deren Eingangsbereich beträgt etwas 50 mm. Daher kann der Roboter 12 mit Hilfe des Hubwagens über die in die Rinne 40 hineinragenden Zentrierstrukturen 22a, 22b gefahren werden, wenn er um 40 mm oder mehr vom Boden abgehoben wurde. Gleichzeitig führt die Rinne 40 die Bewegung des Roboters 12 in der Längsrichtung, wenn er um weniger als 90 mm vom Boden abgehoben wurde.

In der Dachfläche 44a der Rinne 44 in der Bodenseite des Sockels 16 des Roboters 12 sind ferner zwei entsprechende Ausnehmungen 28a, 28b in der Form von Innenpyramidenstümpfen vorgesehen (Fig. 4), die Vertiefungen in der Rinne 44 bilden und in denen die Tiefe der Rinne der vollen Höhe der Zentrierstrukturen 22a, 22b entspricht. Eine Rückseite der hinteren der beiden Ausnehmungen 28a bildet eine Abschlusswand der Rinne 44 und eine schräge Anschlagfläche 44a, an welche die hintere Zentrierstruktur 22a beim Heranfahren des Roboters 12 anschlägt und eine weitere Bewegung des Roboters 12 in Längsrichtung verhindert (Fig. 6a, 6b). Beim Absenken des Roboters 12 in der vertikalen Richtung gleiten die pyramidenstumpfförmigen Vorsprünge 22a, 22b in die Ausnehmungen 28a, 28b. Erfolgt das Absenken mit einem geringen Versatz gegenüber der Soll-Position, gleiten die Ausnehmungen 28a, 28b auf die Vorsprünge, wobei der Roboter 12 in beiden horizontalen Richtungen in die durch die Zentrierstrukturen 22a, 22b definierte Aufstellposition verschoben wird. Dadurch wird der Roboter 12 immer präzise in der definierten Aufstellposition aufgestellt.

Um den Roboter 12 zu sichern, umfasst der Roboter 12 ferner einen Verriegelungsmechanismus 30.

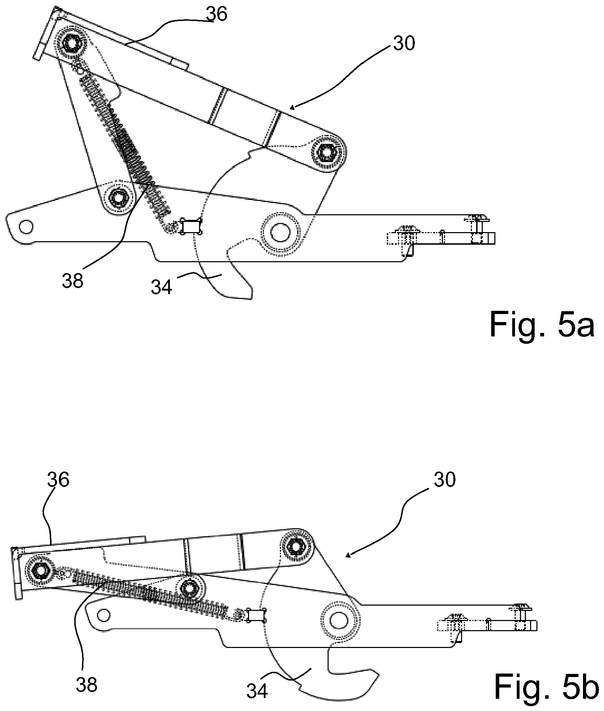

Fig. 5a zeigt einen roboterseitigen Teil des Verriegelungsmechanismus 30 des Robotersystems 10 nach den Figuren 1 - 3 in einer entriegelten Konfiguration und Fig. 5a zeigt den roboterseitigen Teil des Verriegelungsmechanismus 30 des Robotersystems 10 nach den Figuren 1 - 3 in einer verriegelten Konfiguration. Fig. 6a zeigt eine Teilschnitt-Ansicht des Robotersystems 10 nach den Figuren 1 - 3 in einer entriegelten Konfiguration und Fig. 6a zeigt eine Teilschnitt-Ansicht des Robotersystems 10 nach den Figuren 1 - 3 in einer verriegelten Konfiguration.

Mittig zwischen den pyramidenstumpfförmigen Vorsprüngen bzw. Zentrierstrukturen 22a, 22b umfasst die die Bodenplatte 14 eine als Quersteg ausgestattete Verriegelungsstruktur 32 zum Verriegeln einer Verbindung zwischen Roboter 12 und Bodenplatte 14. Der Roboter 12 umfasst eine entsprechende, als Verriegelungshaken 34 ausgestaltete Verriegelungsstruktur, der zum Verriegeln der Verbindung mit dem Quersteg 32 in Eingriff tritt und den Roboter 12 spielfrei und fest mit der Bodenplatte 14 verbindet.

Der Sockel 16 umfasst einen Ver- und Entriegelungshebel 36 zum Ver- Entriegeln der Verbindung. Durch Betätigen des Ver- und Entriegelungshebels 36 mit einem Fuß schwenkt der Verriegelungshaken 34 in den Eingriff mit dem Quersteg 32 bzw. von diesem fort. Eine Feder 38 arretiert den als Fußhebel ausgestalteten Ver- und Entriegelungshebel 36 und den Verriegelungshaken 34 in den Endpositionen der Schwenkbewegung des Verriegelungshakens 34, so dass jeweils eine merkliche Kraft überwunden werden muss, um die Verbindung zu verriegeln oder zu entriegeln.

Der Verriegelungsmechanismus 30 kann einen Sicherheitsschalter (nicht dargestellt) umfassen, der aktiviert wird, wenn der Roboter 12 vollständig verriegelt ist. Die Steuerung des Roboters 12 kann den Betrieb des Roboters 12 sperren, bis der Roboter 12 sicher verriegelt ist.

Der Ver- und Entriegelungshebel 36 kann, wie in Fig. 3 dargestellt, hinter der Abdeckung 26 des Sockels 16 angeordnet sein, so dass er für vorbeilaufende Benutzer keine Stolperfalle und kein Verletzungsrisiko darstellt.

Durch die gemäß der Erfindung verbesserte Zentrierung kann eine erneute Kalibrierung eines Roboters, der z.B. zu Wartungszwecken entfernt worden war und wieder an seiner Aufstellposition aufgestellt wird, vereinfacht werden oder komplett entfallen. Wird der mobile Roboter an unterschiedlichen Aufstellpositionen genutzt, kann die Steuerung mehrere Kalibrierungen speichern, die abhängig von der Aufstellposition genutzt werden können. Die Steuerung kann die Aufstellposition selbsttätig erkennen, z.B. mit Hilfe einer IP-Adresse, die beim Anschluss an ein Datennetzwerk erkannt wird, oder den Benutzer auffordern, über ein Display die Aufstellposition zu festzulegen. Wenn aufgrund hoher Anforderungen trotz der reproduzierbaren Aufstellposition nach dem Neuaufstellen eine Kalibrierung oder Feinkalibrierung notwendig ist, kann der Kalibrierungsvorgang oder eine Aufforderung an den Benutzer zum Starten des Kalibrierungsvorgangs durch die Betätigung des Sicherheitsschalters des Verriegelungsmechanismus ausgelöst werden.

## Patentansprüche

1. Robotersystem (10) mit einem Roboter (12) und einer Bodenplatte (14) zum Aufstellen des Roboters (12) in einer definierten Aufstellposition, wobei die Bodenplatte (14) zur Verankerung im Boden ausgelegt ist,
**dadurch gekennzeichnet, dass**
die Bodenplatte (14) und der Roboter (12) Zentrierstrukturen (22a, 22b) zum Zentrieren des Roboters (12) beim Vorgang des vertikalen Abstellens des Roboters (12) auf der Bodenplatte (14) umfassen, wobei der Roboter (12) beim Vorgang des vertikalen Abstellens des Roboters (12) auf der Bodenplatte (14) durch die Zentrierstrukturen (22a, 22b) in beiden horizontalen Richtungen in die definierte Aufstellposition verschoben wird.

2. Robotersystem (10) nach Anspruch 1,
**dadurch gekennzeichnet, dass**
die Zentrierstrukturen (22a, 22b) wenigstens einen kegel- oder pyramidenstumpfförmigen Vorsprung der Bodenplatte (14) und wenigstens eine entsprechende kegel- oder pyramidenstumpfförmige Ausnehmung an der Bodenseite des Roboters (12) umfassen.

3. Robotersystem (10) nach einem der vorhergehenden Ansprüche,
**dadurch gekennzeichnet, dass**
die Bodenplatte (14) und der Roboter (12) Verriegelungsstrukturen (32, 34) zum Verriegeln einer Verbindung zwischen Roboter (12) und Bodenplatte (14) umfassen.

4. Robotersystem (10) nach Anspruch 3,
**gekennzeichnet durch**
einen Entriegelungshebel (36) zum Entriegeln der Verbindung.

5. Robotersystem (10) nach einem der vorhergehenden Ansprüche,
**dadurch gekennzeichnet, dass**
der Roboter (12) einen Sockel (16) und einen auf einer Oberseite des Sockels (16) montierten 5-Achs oder 6-Achs-Industrieroboter (12a) umfasst und an der Bodenseite, zu einer Rückseite des Sockels (16) hin geöffnete horizontale Rinnen (20) zum Einschieben der Zinken eines Hubwagens umfasst.

6. Robotersystem (10) nach Anspruch 5,
**gekennzeichnet durch**
einen am Sockel (16) montierten Tragarm (24) zum Tragen einer Kamera (42a, 42b), wobei der Tragarm (24) an der Rückseite des Sockels (16) in die Höhe ragt und über die Vorderseite des Sockels (16) auskragt.

7. Robotersystem (10) nach Anspruch 5 oder 6,
**gekennzeichnet durch**
wenigstens einen in den Sockel (16) integrierten Sicherheitsscanner (40).

8. Robotersystem (10) nach einem der vorhergehenden Ansprüche,
**dadurch gekennzeichnet, dass**
der Roboter (12) eine Steuerung mit einer Speichereinheit zum Speichern einer oder mehrerer jeweils einer von einer oder mehreren unterschiedlichen Aufstellpositionen zugeordneter Kalibrierungen umfasst, wobei die Steuerung dazu ausgelegt ist, nach dem Aufstellen an einer Aufstellposition eine dieser Aufstellposition zugeordnete Kalibrierung abzurufen und im Betrieb zu nutzen.
